# EUROPEAN PATENT APPLICATION

(11) **EP 3 689 648 A1**
(43) Date of publication of application: **05.08.2020**
(21) Application number: 19212584.7
(22) Date of filing: 29.11.2019
(51) Int. Cl.: B60H 1/00, B60H 1/22, B60S 1/02

(54) **CONTROL APPARATUS FOR VEHICLE AND CONTROL METHOD FOR VEHICLE**

(30) Priority: 29.01.2019 JP 2019013209
(71) Applicant: TOYOTA JIDOSHA KABUSHIKI KAISHA, Toyota-shi, Aichi-ken, 471-8571 (JP)
(72) Inventor: NISHIYAMA, Masahiro, Toyota-shi, Aichi-ken, 471-8571 (JP); TSUKAGISHI, Kenji, Toyota-shi, Aichi-ken, 471-8571 (JP); KANEKO, Takahisa, Toyota-shi, Aichi-ken, 471-8571 (JP)
(74) Representative: Kuhnen & Wacker Patent- und Rechtsanwaltsbüro PartG mbB

(57) **Abstract**

A control apparatus for a vehicle (V) includes an air conditioner configured to perform pre-air-conditioning for previously air-conditioning an inside of a vehicle cabin (500) before a user (U) gets in the vehicle. The control apparatus includes: a determining unit (202) configured to, when the air conditioner is performing the pre-air-conditioning, determine whether an operation of a heating device (HD) or cooling device (CD) is required, the heating device and the cooling device being mounted on the vehicle to improve comfort of the user; and a device control unit (203) configured to operate one of the heating device and the cooling device, whose operation is determined to be required by the determining unit.

## Description

### BACKGROUND OF THE INVENTION

### 1. Field of the Invention

The invention relates to a control apparatus for a vehicle and a control method for a vehicle.

### 2. Description of Related Art

As is described in Japanese Unexamined Patent Application Publication No. 2012-046085 (JP 2012-046085 A) as a related art, it is known that a vehicle cabin environment (such as a temperature environment inside a vehicle cabin) is pre-air-conditioned by an air conditioner to improve the vehicle cabin environment before a user gets in a vehicle. This pre-air-conditioning is performed when a user before getting in a vehicle sends a pre-air-conditioning start command signal to the air conditioner of the vehicle by operating a mobile communication terminal, such as an electronic key or a smartphone.

The air conditioner that has received the pre-air-conditioning start command signal performs pre-air-conditioning by setting an air outlet temperature of conditioning air and setting an air outlet mode (selecting from among FACE mode, FOOT mode, DEF mode, and the like) according to a vehicle cabin temperature, a set vehicle cabin temperature, or the like. Thus, discomfort at the time when the user gets in the vehicle thereafter (discomfort due to a poor temperature environment inside the vehicle cabin) can be reduced.

### SUMMARY OF THE INVENTION

Incidentally, in the pre-air-conditioning, air-conditioning operation is performed according to a set air outlet temperature of conditioning air and a set air outlet mode, so there is a limit to sufficiently improve comfort at the time when a user gets in the vehicle. Here, comfort is not only a temperature environment inside a vehicle cabin but also a concept including at least one of comfort and easiness of driving for a user (driver) to drive a vehicle, good functioning of devices equipped for a vehicle, and the like. In other words, there is a limit to sufficiently improve comfort by using only conditioning air to improve the comfort.

The invention provides a control apparatus for a vehicle and a control method for a vehicle, which is able to sufficiently improve comfort at the time when a user gets in the vehicle equipped with an air conditioner that can perform pre-air-conditioning.

A control apparatus for a vehicle, including an air conditioner configured to perform pre-air-conditioning for previously air-conditioning an inside of a vehicle cabin before a user gets in the vehicle, according to an aspect of the present invention includes: a determining unit configured to, when the air conditioner is performing the pre-air-conditioning, determine whether an operation of a heating device or cooling device is required, the heating device and the cooling device being mounted on the vehicle to improve comfort of the user; and a device control unit configured to operate one of the heating device and the cooling device, whose operation is determined to be required by the determining unit.

According to the above aspect, during the pre-air-conditioning that the inside of the vehicle cabin is previously air-conditioned before the user gets in the vehicle, the determining unit determines whether the operation of each of the heating device and the cooling device (devices to improve the comfort of the user in the vehicle) is required. The device control unit operates the device, whose operation is determined to be required by the determining unit. The device may be operated by using electric power from the external power supply. The electric power from the external power supply may be electric power charged from the external power supply to the battery or may be electric power that is directly supplied from the external power supply to the device. Thus, the comfort of the user, which has been difficult to be obtained with only conditioning air through pre-air-conditioning, can be sufficiently improved with the operation of the device. In other words, comfort at the time when the user gets in the vehicle (comfort, such as a temperature environment inside the vehicle cabin, comfort or easiness of driving for the user to drive the vehicle, and good functioning of devices equipped for the vehicle) can be sufficiently improved.

In the above aspect, the control apparatus may further include an air outlet mode setting unit configured to automatically set an air outlet mode of conditioning air during the pre-air-conditioning according to an environmental condition, wherein the determining unit may be configured to determine whether the operation of each of the heating device and the cooling device is required according to the air outlet mode automatically set by the air outlet mode setting unit.

When the air outlet mode of conditioning air during pre-air-conditioning is automatically set according to an environmental condition, the air outlet mode suitable for the environmental condition is selected. For this reason, according to the above configuration, when it is determined whether the operation of each of the heating device and the cooling device is required according to the automatically set air outlet mode, the operational status of the device suitable for the environmental condition is obtained.

In the above aspect, the air conditioner may be configured to set a FOOT mode or a FACE mode as the air outlet mode for conditioning air into the vehicle cabin, the FOOT mode being set on a request to heat the inside of the vehicle cabin, and the FACE mode being set on a request to cool the inside of the vehicle cabin, and the determining unit may be configured to when the air outlet mode set by the air outlet mode setting unit is the FOOT mode, determine that the operation of the heating device and when the air outlet mode set by the air outlet mode setting unit is the FACE mode, determine that the operation of the cooling device.

In the above aspect, the heating device may include at least one of an electrical heated windshield configured to heat a windshield, a rear defogger configured to heat a rear window glass, a mirror heater configured to heat a side mirror, a wiper deicer configured to heat a portion around a wiper blade on the windshield, a seat heater configured to heat a seat, a steering heater configured to heat a steering wheel, and a glass dimmer configured to increase a light transmittance of a window glass when operated; the cooling device may include a seat ventilation system configured to radiate heat of the seat; the air conditioner may be configured to set a FOOT mode, a FACE mode, or a DEF mode as the air outlet mode for conditioning air into the vehicle cabin, the FOOT mode being set on a request to heat the inside of the vehicle cabin, the FACE mode being set on a request to cool the inside of the vehicle cabin, and the DEF mode being set on a request to defog the windshield or on a request to thaw freeze; and the determining unit may be configured to when the air outlet mode set by the air outlet mode setting unit is the FOOT mode, determine that the operation of at least one of the seat heater, the steering heater, and the glass dimmer is required, when the air outlet mode set by the air outlet mode setting unit is the FACE mode, determine that the seat ventilation system needs to be operated, and when the air outlet mode set by the air outlet mode setting unit is the DEF mode, determine that the operation of at least one of the electrical heated windshield, rear defogger, mirror heater, and the wiper deicer is required.

According to the above configuration, when the pre-air-conditioning is performed in the case where the temperature in the vehicle cabin is low, there arises a request to heat the inside of the vehicle cabin, and the air outlet mode is set to the FOOT mode. Therefore, when the air outlet mode is the FOOT mode, it is determined that the temperature inside the vehicle cabin is low, and at least one of the seat heater, steering heater, and the glass dimmer is operated in parallel with the pre-air-conditioning. In other words, by performing at least one of heating the seat, heating the steering wheel, and facilitating an increase in the temperature inside the vehicle cabin as a result of increasing the light transmittance of the window glass, cold discomfort to be felt by the user in the vehicle is reduced.

When the pre-air-conditioning is performed in the case where the temperature inside the vehicle cabin is high, there arises a request to cool the inside of the vehicle cabin, so the air outlet mode is set to the FACE mode. Therefore, when the air outlet mode is the FACE mode, it is determined that the temperature inside the vehicle cabin is high, and the seat ventilation system is operated in parallel with the pre-air-conditioning. In other words, by radiating heat of the seat, hot discomfort to be felt by the user in the vehicle is reduced.

For example, when the outside air temperature is low (for example, below freezing temperature), and in a situation in which fogging can occur or ice, snow, or frost can adhere on a window glass or side mirror or a wiper blade of a wiper blade device can stick to the window glass, there arises a request to defog the window glass or a request to thaw freeze, and the air outlet mode is set to the DEF mode. Therefore, when the air outlet mode is the DEF mode, it is determined that the outside air temperature is low, and at least one of the electrical heated windshield, the rear defogger, the mirror heater, and the wiper deicer is operated in parallel with the pre-air-conditioning. In other words, by performing at least one of heating the windshield, heating the rear window glass, heating the side mirror, and heating a portion around the wiper blade, fogging on the window glass or side mirror is removed, adherent ice, snow, or frost is removed, or sticking of the wiper blade is cleared.

In the above aspect, the control apparatus may further include an environmental condition history acquiring unit configured to, when the air conditioner starts the pre-air-conditioning, acquire a history of an environmental condition outside the vehicle, wherein the determining unit may be configured to determine whether the operation of each of the heating device and the cooling device is required according to the history acquired by the environmental condition history acquiring unit.

According to the above configuration, an appropriate device suitable for the history of the environmental condition can be operated. For example, when the weather is fine and the outside air temperature is high at the time of the start of the pre-air-conditioning but it had snowed within a predetermined time till then or it had rained in a state where the outside air temperature is below freezing temperature, ice, snow, or frost adherent on the window glass can be effectively removed by operating the device that heats the window glass. In other words, even when the air outlet mode is the FOOT mode, ice, snow, or frost adherent on the window glass can be effectively removed by operating the electrical heated windshield, the rear defogger, or the wiper deicer.

In the above aspect, the determining unit may be configured to when the history contains information that an outside air temperature has been lower than or equal to a first predetermined temperature, determine that the operation of the heating device is required, and when the history contains information that the outside air temperature has been higher than or equal to a second predetermined temperature, determine that the operation of the cooling device is required.

In the above aspect, the heating device may include at least one of an electrical heated windshield configured to heat a windshield, a rear defogger configured to heat a rear window glass, a mirror heater configured to heat a side mirror, a wiper deicer configured to heat a portion around a wiper blade on the windshield, a seat heater configured to heat a seat, a steering heater configured to heat a steering wheel, and a glass dimmer configured to increase a light transmittance of a window glass when operated; the cooling device may include a seat ventilation system configured to radiate heat of the seat; the determining unit may be configured to when the history contains information that an outside air temperature has been lower than or equal to a first predetermined temperature without a rainfall, determine that the operation of at least one of the seat heater, the steering heater, and the glass dimmer is required, when the history contains information that the outside air temperature has been higher than or equal to a second predetermined temperature, determine that the operation of the seat ventilation system is required, and when the history contains at least one of information that snow has fallen, information that the outside air temperature is lower than or equal to a third predetermined temperature with the rainfall, and information that a humidity outside the vehicle has been higher than or equal to a predetermined value, determine that the operation of at least one of the electrical heated windshield, the rear defogger, the mirror heater, and the wiper deicer is required.

According to the above configuration, when there is a history that there has been no rainfall and the outside air temperature has been lower than or equal to the predetermined temperature, it is determined that the temperature inside the vehicle cabin is low although no ice or snow is adherent on the window glass, and at least one of the seat heater, the steering heater, and the glass dimmer is operated in parallel with the pre-air-conditioning. Thus, cold discomfort to be felt by the user in the vehicle is reduced.

When there is a history that the outside air temperature has been higher than or equal to the predetermined temperature, it is determined that the temperature inside the vehicle cabin is high, and the seat ventilation system is operated in parallel with the pre-air-conditioning. Thus, hot discomfort to be felt by the user in the vehicle is reduced.

When there is at least one of a history that there has been snowfall, there has been rainfall in a state where the outside air temperature is lower than or equal to the predetermined temperature, and a history that the humidity outside the vehicle has been higher than or equal to the predetermined value, at least one of the electrical heated windshield, the rear defogger, the mirror heater, and the wiper deicer is operated in parallel with the pre-air-conditioning. Thus, fogging on the window glass or side mirror is removed, adherent ice, snow, or frost is removed, or sticking of the wiper blade is cleared.

According to the above operation, regardless of an air-conditioning request in pre-air-conditioning, an appropriate device suitable for a history of an environmental condition can be operated.

In the above aspect, the comfort may include at least one of a temperature environment inside the vehicle cabin, comfort or easiness of driving for the user to drive the vehicle, and good functioning of devices equipped for the vehicle.

In the above aspect, the heating device and the cooling device may be different devices from the air conditioner.

In the above aspect, the vehicle may include a charging unit configured to charge a battery with electric power from an external power supply, and the device control unit may be configured to operate the heating device or the cooling device by using the electric power the external power supply.

A control method for a vehicle, including an air conditioner configured to perform pre-air-conditioning for previously air-conditioning an inside of a vehicle cabin before a user gets in the vehicle, according to a second aspect of the present application is performed by an electronic control unit. The control method includes: determining whether an operating condition of each of a heating device and a cooling device is satisfied while the air conditioner is performing the pre-air-conditioning, the heating device and the cooling device being mounted on the vehicle to improve comfort of the user; operating the heating device when the operating condition of the heating device is satisfied; and operating the cooling device when the operating condition of the cooling device is satisfied.

In the above aspect, the control method may further include setting heating the inside of the vehicle cabin or cooling the inside of the vehicle cabin as the pre-air-conditioning automatically according to an environmental condition outside the vehicle.

In the above aspect, the operating condition of the heating device may be that heating the inside of the vehicle cabin is being performed as the pre-air-conditioning; and the operating condition of the cooling device may be that cooling the inside of the vehicle cabin is being performed as the pre-air-conditioning.

In the above aspect, the control method may further include acquiring a history of an environmental condition outside the vehicle at a timing when the air conditioner starts the pre-air-conditioning, wherein the operating conditions of the heating device and the cooling device may be predetermined based on the environmental condition.

In the above aspect, the operating condition of the heating device may be that the history contains information that an outside air temperature has been equal to or lower than a first predetermined temperature, and the operating condition of the cooling device may be that the history contains information that the outside air temperature has been higher than a second predetermined temperature.

With the invention, during pre-air-conditioning inside a vehicle cabin, of a heating device and a cooling device to improve the comfort of a user in a vehicle, a device, whose operation is determined to be required, is operated. Thus, the comfort of the user, which has been difficult to be obtained with only conditioning air through pre-air-conditioning, can be sufficiently improved with the operation of the device. As a result, comfort at the time when the user gets in the vehicle can be sufficiently improved.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view for illustrating a situation in which pre-air-conditioning is performed;
FIG. 2 is a graph that shows an example of a change in vehicle cabin temperature and a change in consumed electric power due to whether pre-air-conditioning is performed;
FIG. 3 is a diagram that shows the schematic configuration of a vehicle according to an embodiment;
FIG. 4 is a block diagram for illustrating the configuration of an ECU and devices;
FIG. 5 is part of a flowchart for illustrating the procedure of control over the devices during the pre-air-conditioning;
FIG. 6 is another part of the flowchart for illustrating the procedure of control over the devices during the pre-air-conditioning; and
FIG. 7 is a diagram corresponding to FIG. 4 in a modification.

### DETAILED DESCRIPTION OF EMBODIMENTS

Hereinafter, an embodiment of the invention will be described with reference to the accompanying drawings. The present embodiment describes, as one example, a case where the invention is applied to a vehicle equipped with a charging unit that charges a battery with electric power from an external power supply. An example of such vehicle may be a plug-in hybrid.

### Outline of Pre-Air-Conditioning

The outline of pre-air-conditioning will be described before the configuration of a vehicle is described.

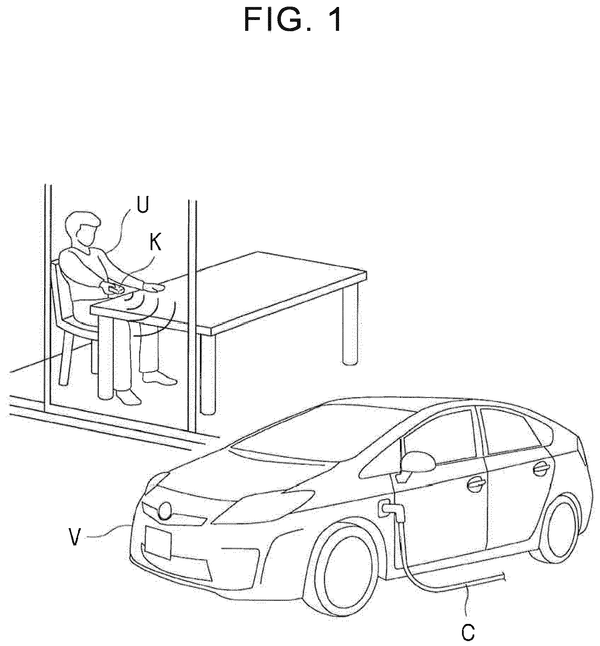

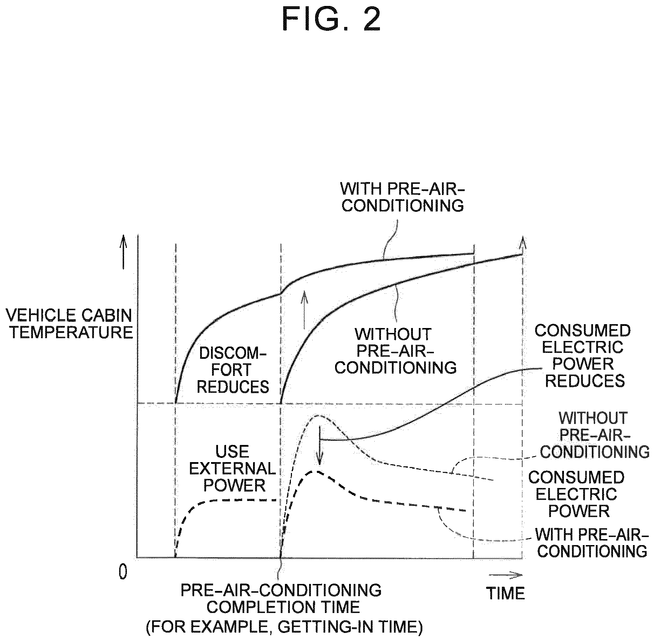

FIG. 1 is a view for illustrating a situation in which pre-air-conditioning is performed. FIG. 2 is a graph that shows an example of a change in vehicle cabin temperature and a change in consumed electric power due to whether pre-air-conditioning is performed.

As shown in FIG. 1, a user U is allowed to control a vehicle (plug-in hybrid vehicle) V by operating a carrying electronic key K even when the vehicle V is parked (when the user U is not in the vehicle V and a hybrid system is stopped). Instead of the electronic key K, a mobile communication terminal, such as a smartphone, may be configured to be used. The electronic key K is configured to be able to wirelessly communicate with the vehicle V. Operations with the electronic key K include an operation to air-condition the vehicle V (an operation to activate pre-air-conditioning). The operations with the electronic key K may include user checking, vehicle door lock control, and the like.

The vehicle V is a hybrid vehicle that uses electric power of a battery (electrical storage device) as one of driving force sources. The battery can be charged with electric power from a power supply outside the vehicle (external power supply) via a charging cable C. Such a hybrid vehicle is called a plug-in hybrid vehicle. The invention is applicable to an electric vehicle instead of a plug-in hybrid vehicle.

The inside of a vehicle cabin of the vehicle V is air-conditioned by an air conditioner mounted on the vehicle V. The air conditioner basically operates on electric power from the battery. The user U is allowed to air-condition the inside of (perform pre-air-conditioning inside) the vehicle cabin with the air conditioner by operating the electronic key K before the user U gets in the vehicle V. In a situation in which the user U is in the vehicle V in a state where the vehicle V is able to travel (in a READY-ON state where the hybrid system has started up), the user U is allowed to cause the air conditioner to air-condition the inside of (perform manual air-conditioning inside) the vehicle cabin by operating a control panel inside the vehicle cabin.

In FIG. 2, the upper side of the graph shows a vehicle cabin temperature. When the vehicle cabin temperature is relatively low in winter, or the like, the user U in the vehicle V feels cold discomfort. When no pre-air-conditioning is performed (see "without pre-air-conditioning" in the graph), the vehicle cabin temperature at getting-in time does not change as compared to before getting in the vehicle. Therefore, the user U in the vehicle feels discomfort. After that, air-conditioning is started as a result of an operation on the control panel by the user U, and the vehicle cabin temperature increases. On the other hand, when pre-air-conditioning is performed (see "with pre-air-conditioning" in the graph), air-conditioning is performed in advance of getting-in time. Therefore, the vehicle cabin temperature at getting-in time is relatively high. As a result, the user U in the vehicle feels comfort. In other words, the cold discomfort of the user U is reduced by pre-air-conditioning.

In FIG. 2, the lower side of the graph shows an electric power consumed by air-conditioning. When pre-air-conditioning is not performed (see "without pre-air-conditioning" in the graph), an electric power consumed by air-conditioning occurs after getting-in time. The consumed electric power is a consumed electric power of the battery. On the other hand, when pre-air-conditioning is performed (see "with pre-air-conditioning" in the graph), the inside of the vehicle cabin is air-conditioned by using electric power charged from the external power supply before getting-in time (external electric power). As a result, when pre-air-conditioning is performed, an electric power consumed by air-conditioning after getting-in time, that is, a consumed electric power of the battery, is reduced as compared to when pre-air-conditioning is not performed.

The air conditioner is able to perform heating operation to send warm air into the vehicle cabin or perform cooling operation to send cool air into the vehicle cabin. The air conditioner is also able to perform ventilating operation to send air outside the vehicle cabin (outside the vehicle) into the vehicle cabin. The specific configuration of the air conditioner will be described later.

### Schematic Configuration of Vehicle

Next, the configuration of the vehicle V according to the present embodiment will be described.

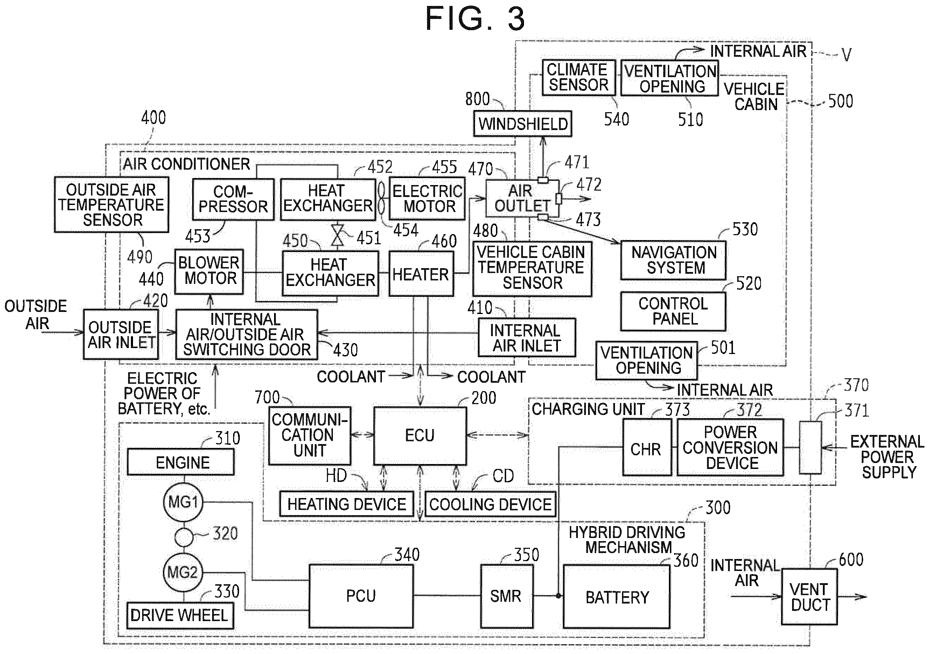

FIG. 3 is a diagram that shows the schematic configuration of the vehicle V according to the present embodiment. The vehicle V is equipped with an electronic control unit (ECU) 200 that is a control unit that controls components included in the vehicle V. The ECU 200 generally includes a known central processing unit (CPU), a read only memory (ROM), a random access memory (RAM), and the like. The ROM stores a control program to execute pre-air-conditioning control (described later) and other control. The CPU executes computation process based on the control program stored in the ROM. The RAM is a memory that temporarily stores results computed in the CPU, or the like.

The vehicle V includes a hybrid driving mechanism 300 and a charging unit 370. The vehicle V includes an air conditioner (air conditioner unit) 400 for air-condition the inside of a vehicle cabin 500 (the inside of the vehicle cabin). The vehicle V further includes a vent duct 600, a communication unit 700, and window glasses such as a windshield 800.

The hybrid driving mechanism 300 includes an engine (internal combustion engine) 310 and motor generators MG1, MG2. The output torque of each of the motor generators MG1, MG2 is transmitted to a drive wheel 330 via a power transmission gear 320. Electric power stored in the battery (electrical storage device) is converted by a power control unit (PCU) 340 to electric power for driving the motor generator MG1 or the motor generator MG2. Electric power generated by the motor generator MG1 or the motor generator MG2 may be converted by the PCU 340 to electric power for charging the battery 360. A system main relay (SMR) 350 switches between a connected state between the battery 360 and the PCU 340 and a disconnected state between the battery 360 and the PCU 340. Electric power of the battery 360 is also used by an air conditioner 400.

The charging unit 370 is configured to be supplied with electric power from a power supply outside the vehicle V via an inlet 371. Electric power supplied to the inlet 371 is converted by a power conversion device 372. The converted electric power is supplied to the battery 360 via a charging relay (CHR) 373 as charging power.

The air conditioner 400 includes an internal air inlet 410, an outside air inlet 420, an internal air/outside air switching door 430, a blower motor 440, heat exchangers 450, 452, a regulating valve 451, a compressor 453, an electric fan 454, an electric motor 455, a heater 460, an air outlet 470, a vehicle cabin temperature sensor 480, and an outside air temperature sensor 490.

The air conditioner 400 is able to perform heating operation to send warm air into the vehicle cabin 500. In the heating operation, air inside the vehicle cabin 500 (internal air) is taken in from the internal air inlet 410 or air outside the vehicle V (outside air) is taken in from the outside air inlet 420. The taken-in air passes through the internal air/outside air switching door 430, then flows toward the heat exchanger 450 by the blower motor 440, and passes through the heater 460. To avoid being warmed by the heater 460, air may bypass the heater 460. The heat exchanger 450 exercises warming function by heat pump operation using the regulating valve 451, the heat exchanger 452, the compressor 453, and the like. The heater 460 exercises warming function by using the heat of coolant for the engine 310. Air that has passed through the heat exchanger 450 and/or the heater 460 is supplied to the air outlet 470 as high-temperature air. The temperature of air to be sent out from the air outlet 470 (target air outlet temperature) in the heating operation is determined in consideration of various factors, such as a set temperature (set vehicle cabin temperature) of the air conditioner 400 and an environment in which the vehicle V is placed (for example, solar radiation).

The air conditioner 400 is also able to perform cooling operation or ventilation operation in addition to the heating operation. In the cooling operation, air decreased in temperature by the cooling function of the heat exchanger 450 is sent out from the air outlet 470 into the vehicle cabin 500. In the ventilation operation, air (outside air) taken into the outside air inlet 420 is sent out from the air outlet 470 into the vehicle cabin 500 almost without any change in temperature. In the cooling operation or the ventilation operation, air flows so as to bypass the heater 460.

Switching of the heat exchanger 450 between the heating operation and the cooling operation is performed by changing the direction of output of the compressor 453. This switching is implemented by providing, for example, a four-way valve (not shown) for the compressor 453. When the heat exchanger 450 is caused to exercise heating function, the direction of output of the compressor 453 is changed toward the heat exchanger 450. On the other hand, when the heat exchanger 450 is caused to exercise cooling function, the direction of output of the compressor 453 is changed toward the heat exchanger 452. The heat exchanger 452 is cooled by air from the electric fan 454. The electric motor 455 drives the electric fan 454. Electric power from the battery 360 is used to operate the air conditioner 400, including the operation of the compressor 453 and electric motor 455 and the operation of the heater 460. Electric power from the external power supply, taken in by the charging unit 370, may be used to operate the air conditioner 400.

The air outlet 470 includes three air outlet portions, that is, a defroster portion 471, a register portion 472, and a foot air outlet portion 473. Air blown from the defroster portion 471 is blown upward from the air outlet 470, that is, blown toward the windshield 800 or a side window glass (not shown). Air blown from the register portion 472 is blown forward (toward near the face of an occupant) from the air outlet 470. Air blown from the foot air outlet portion 473 is blown downward (toward near the feet of an occupant) from the air outlet 470.

The vehicle cabin temperature sensor 480 measures the temperature in the vehicle cabin 500 (vehicle cabin temperature). The outside air temperature sensor 490 measures the temperature outside the vehicle V (outside air temperature).

The vehicle cabin 500 is a riding space for the user U. A ventilating opening 510 is provided in the vehicle cabin 500. In air-conditioning, air inside the vehicle cabin 500 (internal air) can pass through an emission passage (not shown) from the ventilating opening 510 and be emitted to the outside of the vehicle V from the vent duct 600. The emission passage may be provided so as to perform heat exchange between internal air to be emitted and the battery 360. A control panel 520 is provided in the vehicle cabin 500. The user U, for example, operates the control panel 520 to activate air-conditioning. A navigation system 530 and a climate sensor 540 are further provided in the vehicle cabin 500.

An operating button (start button) for setting the vehicle V in the READY-ON state (the state where the vehicle V is able to travel) and other buttons are provided on the control panel 520. The ECU 200 is allowed to determine that the user U is in the vehicle V when the vehicle V is in the READY-ON state; otherwise, the ECU 200 is allowed to determine that the user U is not in the vehicle V when the vehicle V is in a READY-OFF state (a state where the vehicle V is not able to travel). A sensor may be provided at a driver seat to determine whether the user U is in the vehicle V.

The navigation system 530 is configured to be able to acquire information about the current position of the vehicle V with a global positioning system (GPS) function, or the like. The navigation system 530 is also configured to be able to acquire weather information of many places through the Internet, or the like. Thus, the vehicle V is able to learn weather information at the current position. A rain sensor or a solar radiation sensor may be used as the climate sensor 540. The rain sensor detects the amount of raindrops adherent on the window glass such as the windshield 800. The solar radiation sensor detects the amount of solar radiation that is irradiated to the windshield 800. In other words, the vehicle V is also able to learn weather information at the current position even with the climate sensor 540. The weather information can be used in air-conditioning for the vehicle V. The climate sensor 540 may be provided in a place other than the vehicle cabin 500 as long as the climate sensor 540 is able to sense weather.

The communication unit 700 communicates with a device outside the vehicle V. The communication unit 700, for example, wirelessly communicates with the electronic key K as shown in FIG. 1.

With the above configuration, the vehicle V is able to charge the battery 360 with electric power from the power supply outside the vehicle V. Air-conditioning is performed under control of the ECU 200 over the air conditioner 400. The user U is allowed to operate the electronic key K described above such that pre-air-conditioning that is air-conditioning before the user U gets in the vehicle V is performed (remote pre-air-conditioning). Air-conditioning is performed even in a state where the user U is in the vehicle V (manual air-conditioning). The user U is allowed to operate the control panel 520 or operate the electronic key K such that manual air-conditioning is performed.

When the air outlet mode of conditioning air is automatically set, warm air is blown from the foot air outlet portion 473 (the FOOT mode is executed) in the heating operation from the viewpoint of warming efficiency, or the like, of the vehicle cabin 500. In the cooling operation, cool air is blown from the register portion 472 (the FACE mode is executed) from the viewpoint of cooling efficiency, or the like, of the vehicle cabin 500. The windshield 800 can be fogged through the heating operation. In this case, warm air is blown from the defroster portion 471 (the DEF mode is executed). In this case, warm air can also be blown from the foot air outlet portion 473. The fog on the windshield 800 is removed and generation of fog is suppressed by warm air that is blown from the defroster portion 471. When ice, snow, or frost is adherent on the windshield 800 as well, warm air is blown from the defroster portion 471 (the DEF mode is executed). Thus, ice, snow, or frost adherent on the windshield 800 is thawed.

### Heating Device and Cooling Device

Next, the devices that are the features of the present embodiment and the configuration of the ECU 200 for controlling the devices will be described.

As described above, since pre-air-conditioning is to set an air outlet temperature of conditioning air and perform air-conditioning operation according to the set air outlet mode, there is a limit to sufficiently improve comfort when a user gets in a vehicle. Comfort is not only a temperature environment inside a vehicle cabin but also a concept including at least one of comfort and easiness of driving for a user (driver) to drive a vehicle, good functioning of devices equipped for a vehicle, and the like. In other words, there is a limit to sufficiently improve comfort by using only conditioning air to improve the comfort.

In the present embodiment, in light of this point, when pre-air-conditioning is performed, various devices are controlled such that comfort at the time when the user U gets in the vehicle is sufficiently improved. Hereinafter, this will be specifically described.

The various devices that are controlled when the pre-air-conditioning is performed include the heating devices HD and the cooling devices CD.

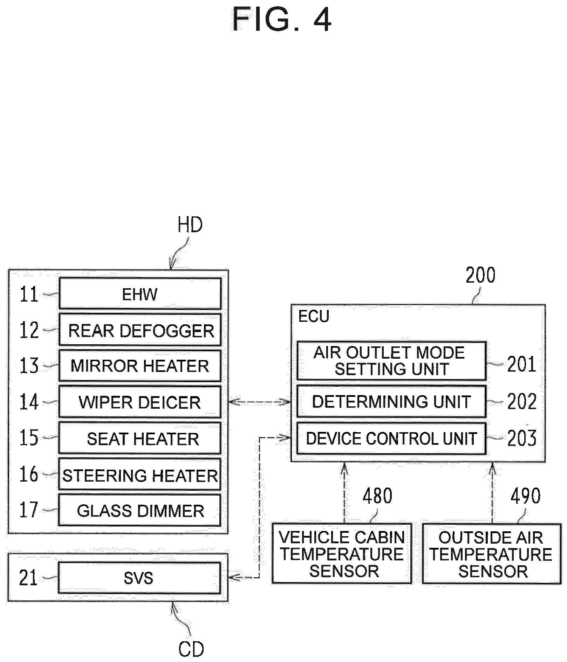

The heating devices HD are to improve comfort at the time when the user U gets in the vehicle by heating or warming or by taking the amount of heat from the outside into the vehicle cabin. Specifically, as shown in FIG. 4 (the block diagram for illustrating the configuration of the ECU 200 and the devices HD, CD), examples of the heating devices HD include an electrical heated windshield (EHW) 11, a rear defogger 12, a mirror heater 13, a wiper deicer 14, a seat heater 15, a steering heater 16, and a glass dimmer 17.

On the other hand, the cooling devices CD are used to improve comfort at the time when the user U gets in the vehicle by cooling (removing heat). Specifically, examples of the cooling devices CD include a seat ventilation system (SVS) 21. These devices are known. Hereinafter, each of the devices will be simply described.

The EHW 11 is intended to prevent fogging of the windshield 800 by heating the windshield 800 or remove the fog when the windshield 800 is fogging, and further remove ice, snow, or frost adherent on the windshield 800 by thawing to remove the ice, snow, or frost. The EHW 11 includes electrically-heated wires embedded in the windshield 800. The EHW 11 heats the windshield 800 by generating heat resulting from energization of the electrically-heated wires. Thus, the EHW 11 prevents fogging of the windshield 800, removes fog on the windshield 800, or removes ice, snow, or frost adherent on the windshield 800 by thawing the ice, snow, or frost. As a result, the forward sight of the user U in the vehicle is improved. In other words, the EHW 11 is able to remove fog on the windshield 800 or thaw ice, snow, or frost adherent on the windshield 800 earlier than when conditioning air is blown from the defroster portion 471 (DEF mode).

The rear defogger 12 is intended to prevent fogging of a rear window glass (not shown) by heating the rear window glass, remove fog on the rear window glass when the rear window glass is fogging, or remove ice, snow, or frost by thawing the ice, snow, or frost when the ice, snow, or frost are adherent on the rear window glass. The rear defogger 12 includes electrically-heated wires printed on the rear window glass. The rear defogger 12 heats the rear window glass by heating resulting from energization of the electrically-heated wires. Thus, the rear defogger 12 prevents fogging of the rear window glass, removes fog on the rear window glass, or removes ice, snow, or frost adherent on the rear window glass by thawing the ice, snow, or frost. As a result, the rearward sight of the user U in the vehicle is improved. In other words, the rear defogger 12 is able to remove fog on the rear window glass or thaw ice, snow, or frost adherent on the rear window glass earlier than when conditioning air is used.

The mirror heater 13 is intended to remove fog on a door mirror (side mirror) of the vehicle when the door mirror is fogging by heating the door mirror or remove ice, snow, or frost by thawing the ice, snow, or frost when the ice, snow, or frost is adherent on the door mirror. The mirror heater 13 includes electrically-heated wires embedded in a mirror (mirror portion). The mirror heater 13 heats the mirror by generating heat as a result of energization of the electrically-heated wires. Thus, the mirror heater 13 removes fog on the door mirror or removes ice, snow, or frost adherent on the door mirror by thawing the ice, snow, or frost. As a result, the rearward visibility of the user (driver) U is improved.

The wiper deicer 14 is intended to heat, for example, the lower part of the windshield 800 to clear a state where a wiper blade of a wiper device (not shown) is stuck to the windshield 800 (frozen to stick). Specifically, the wiper deicer 14 includes electrically-heated wires embedded in the lower part of the windshield 800. The wiper deicer 14 heats the lower part of the windshield 800 by generating heat as a result of energization of the electrically-heated wires and removing freeze on the windshield 800. Thus, sticking of the wiper blade is cleared, and the wiper device is smoothly operated. In other words, the wiper deicer 14 is able to clear sticking of the wiper blade by removing freeze on the windshield 800 earlier than when conditioning air is blown from the defroster portion 471 (DEF mode) and cause smooth functioning of the wiper device.

In the seat heater 15, electrically-heated wires are accommodated in a seat cushion portion (seating face portion) or seatback portion (back rest portion) of a seat such as a driver seat and a front passenger seat. The seat heater 15 is intended to improve the comfort of the seated user U by heating the seat cushion portion and seat back portion of the seat with generated heat resulting from energization of the electrically-heated wires in winter, or the like.

Electrically-heated wires are accommodated in the steering heater 16. The steering heater 16 is intended to increase the comfort of the user (driver) U who grips the steering wheel by heating the steering wheel with generated heat resulting from energization of the electrically-heated wires in winter, or the like.

The glass dimmer 17 changes the light transmittance of a side window glass or roof glass (in the case of a vehicle equipped with a roof glass). The glass dimmer 17 is made up of, for example, a laminated glass with a liquid crystal thin film interposed in the laminated glass. The glass dimmer 17 is able to change the light transmittance from a low state to a high state by applying voltage. In other words, in an ordinary state where no voltage is applied, the light transmittance is set to a low state, and the amount of solar radiation into the vehicle cabin is decreased, with the result that an increase in the vehicle cabin temperature due to the solar radiation can be suppressed. On the other hand, in a state where voltage is applied, the light transmittance is set to a high state, and the amount of solar radiation into the vehicle cabin is increased, with the result that an increase in the vehicle cabin temperature due to the solar radiation can be facilitated.

The SVS 21 includes an air sending fan incorporated in a seat, such as a driver seat and a front passenger seat. The SVS 21 releases heat accumulated in the seat by operating the air sending fan in summer, or the like, and generates air current for flowing conditioning air (cool air) blowing from the air outlet 470 toward the seat. Thus, the SVS 21 decreases the temperature of the seat. The air sending fan is desirably incorporated in both the seat cushion portion and seat back portion of the seat; however, the air sending fan may be incorporated in only one of the seat cushion portion and the seat back portion. The SVS 21 may be a temperature regulating device that uses a Peltier element instead of using an air sending fan.

The heating devices HD and the cooling device CD operate upon receiving an operation command signal from the ECU 200. In other words, as an EHW operation command signal is output from the ECU 200, the EHW 11 is operated to start heating the windshield 800. As a rear defogger operation command signal is output from the ECU 200, the rear defogger 12 is operated to start heating the rear window glass. As a mirror heater operation command signal is output from the ECU 200, the mirror heater 13 is operated to start heating the door mirror. As a wiper deicer operation command signal is output from the ECU 200, the wiper deicer 14 is operated to start heating the lower part of the windshield 800. As a seat heater operation command signal is output from the ECU 200, the seat heater 15 is operated to start heating the seat. As a steering heater operation command signal is output from the ECU 200, the steering heater 16 is operated to start heating the steering wheel. As a glass dimmer operation command signal is output from the ECU 200, the glass dimmer 17 is operated to start operation to increase the amount of solar radiation into the vehicle cabin by increasing the light transmittance of the side window glass or the roof glass. As an SVS operation command signal is output from the ECU 200, the SVS 21 is operated to start cooling (radiating heat of) the seat.

As shown in FIG. 4, the ECU 200 includes an air outlet mode setting unit 201, a determining unit 202, and a device control unit 203. The air outlet mode setting unit 201, the determining unit 202, and the device control unit 203 are implemented by the control program stored in the ROM of the ECU 200.

The air outlet mode setting unit 201 sets the air outlet mode of conditioning air according to an outside air temperature, a vehicle cabin temperature, a set vehicle cabin temperature, and the like, while the air conditioner 400 is performing pre-air-conditioning.

Specifically, for example, when the set vehicle cabin temperature is higher than the vehicle cabin temperature and the difference between the set vehicle cabin temperature and the vehicle cabin temperature is greater than or equal to a predetermined value, the air outlet mode setting unit 201 determines that there is a request to heat the inside of the vehicle cabin, and sets the air outlet mode to the FOOT mode. In other words, conditioning air (conditioning air heated by the heater 460, or the like) is blown from the foot air outlet portion 473. For example, when the set vehicle cabin temperature is lower than the vehicle cabin temperature and the difference between the set vehicle cabin temperature and the vehicle cabin temperature is greater than or equal to a predetermined value, the air outlet mode setting unit 201 determines that there is a request to cool the inside of the vehicle cabin, and sets the air outlet mode to the FACE mode. In other words, conditioning air (conditioning air cooled by passing the heat exchanger 450) is blown from the register portion 472. The set vehicle cabin temperature in pre-air-conditioning may be set by the user U operating the electronic key K or may be set as a prescribed temperature (for example, 22°C, or the like). When the outside air temperature is lower than or equal to the predetermined temperature or the humidity in the vehicle cabin is higher than or equal to the predetermined value, the air outlet mode setting unit 201 may determine that there is a defrosting request (a request to defrost the windshield 800, or the like; including an antifogging request) or a request to thaw freeze (a request to thaw ice, snow, or frost adherent on the windshield 800, or the like), and may set the air outlet mode to the DEF mode. In other words, conditioning air (conditioning air warmed by the heater 460, or the like) may be blown from the defroster portion 471. Other than the above-described modes, a BILEVEL mode or a FOOT/DEF mode may be set as the air outlet mode of conditioning air.

While the air conditioner 400 is performing pre-air-conditioning, the determining unit 202 determines whether the operation of each of the heating devices HD (the EHW 11, the rear defogger 12, the mirror heater 13, the wiper deicer 14, the seat heater 15, the steering heater 16, and the glass dimmer 17) and the cooling device CD (the SVS 21) is required.

Specifically, the determining unit 202 determines whether the operation of each of the heating devices HD and the cooling device CD is required according to the conditioning air outlet mode set by the air outlet mode setting unit 201.

When the conditioning air outlet mode set by the air outlet mode setting unit 201 is the FOOT mode (when there is a heating request), the determining unit 202 determines that the operation of each of the seat heater 15, the steering heater 16, and the glass dimmer 17 is required and determines that the operation of each of the EHW 11, the rear defogger 12, the mirror heater 13, the wiper deicer 14, and the SVS 21 is not required.

When the conditioning air outlet mode set by the air outlet mode setting unit 201 is the FACE mode (when there is a cooling request), the determining unit 202 determines that the operation of the SVS 21 is required and determines that the operation of each of the EHW 11, the rear defogger 12, the mirror heater 13, the wiper deicer 14, the seat heater 15, the steering heater 16, and the glass dimmer 17 is not required.

When the conditioning air outlet mode set by the air outlet mode setting unit 201 is the DEF mode (when there is a defogging request or a freeze thawing request), the determining unit 202 determines that the operation of each of the EHW 11, the rear defogger 12, the mirror heater 13, and the wiper deicer 14 is required and determines that the operation of each of the seat heater 15, the steering heater 16, the glass dimmer 17, and the SVS 21 is not required.

Of the heating devices HD and the cooling device CD, the device control unit 203 operates the device(s), whose operation is determined to be required by the determining unit 202, with electric power from the external power supply (for example, electric power charged from the external power supply to the battery 360).

In other words, when the conditioning air outlet mode set by the air outlet mode setting unit 201 is the FOOT mode (when there is a heating request), the device control unit 203 outputs the seat heater operation command signal, the steering heater operation command signal, and the glass dimmer operation command signal. When the conditioning air outlet mode set by the air outlet mode setting unit 201 is the FACE mode (when there is a cooling request), the device control unit 203 outputs the SVS operation command signal. When the conditioning air outlet mode set by the air outlet mode setting unit 201 is the DEF mode (when there is a defogging request or a freeze thawing request), the device control unit 203 outputs the EHW operation command signal, the rear defogger operation command signal, the mirror heater operation command signal, and the wiper deicer operation command signal.

### Control over Devices during Pre-Air-Conditioning

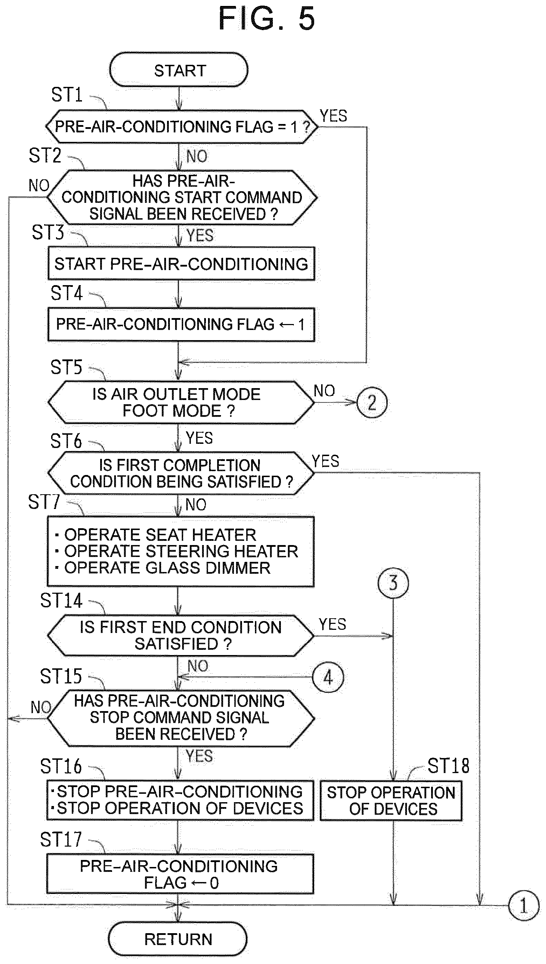

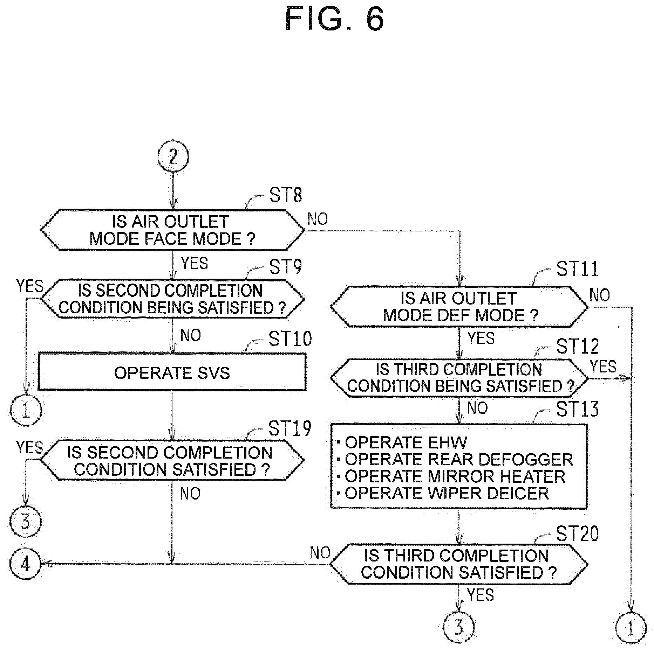

Next, the procedure of control over each of the heating devices HD and the cooling device CD during pre-air-conditioning will be described. FIG. 5 and FIG. 6 show a flowchart for illustrating the procedure of control over the devices HD, CD during pre-air-conditioning. The flowchart is executed each time the user U operates the electronic key K in a state where the user U is not in the vehicle V and the hybrid system is stopped.

Pre-air-conditioning in the present embodiment is performed in a state where the charging cable C is connected to the inlet 371 of the vehicle V (see FIG. 1) and the battery 360 is being charged or charging of the battery 360 is complete. For example, it is assumed that charging is performed in the nighttime and the user U operates the electronic key K to activate pre-air-conditioning in the next morning after charging has been completed.

First, in step ST1, it is determined whether a pre-air-conditioning flag prestored in the ECU 200 is set to 1. The pre-air-conditioning flag is set at 1 when pre-air-conditioning is performed and is reset to 0 when the pre-air-conditioning ends (a change in the pre-air-conditioning flag will be described later). At the timing when the user U operates the electronic key K to make a request for pre-air-conditioning, the pre-air-conditioning flag has been reset to 0.

When the pre-air-conditioning flag has been reset to 0 and negative determination is made in step ST1, the process proceeds to step ST2. In step ST2, it is determined whether a pre-air-conditioning start command signal has been received from the electronic key K as a result of an operation on the electronic key K by the user U. The pre-air-conditioning start command signal is received by the communication unit 700, and the information is sent to the ECU 200.

When the pre-air-conditioning start command signal has not been received, it is determined that a vehicle door lock control signal (signal for unlocking the door), or the like, has been received, pre-air-conditioning is not requested (no request for pre-air-conditioning is issued from the user U), and the operation of each of the heating devices HD and the cooling device CD is not required, and negative determination is made in step ST2, after which the process is returned.

On the other hand, when the pre-air-conditioning start command signal has been received and affirmative determination is made in step ST2, the process proceeds to step ST3, and pre-air-conditioning is started. For example, pre-air-conditioning is performed by setting the conditioning air outlet temperature and setting the conditioning air outlet mode (selecting one of the FACE mode, the FOOT mode, the DEF mode, and the like) according to the vehicle cabin temperature, the set vehicle cabin temperature, and the like. The air outlet mode in the pre-air-conditioning is set by the air outlet mode setting unit 201. With the start of the pre-air-conditioning in this way, the pre-air-conditioning flag is set to 1 in step ST4.

After that, the process proceeds to step ST5. In step ST5, it is determined whether the conditioning air outlet mode set by the air outlet mode setting unit 201 is the FOOT mode. When the air outlet mode is the FOOT mode and affirmative determination is made in step ST5, the process proceeds to step ST6. In step ST6, it is determined whether a first completion condition (described later) is satisfied. The first completion condition is a condition for stopping the devices (the seat heater 15, the steering heater 16, and the glass dimmer 17) that are operated when the air outlet mode is the FOOT mode, and is satisfied, for example, when an elapsed time from the start of operation of these devices has reached a predetermined time. The first completion condition is not limited thereto, and may be set as needed. For example, the first completion condition may be satisfied when the temperature of the seat, the temperature of the steering wheel, the vehicle cabin temperature, and the like, are detected and the temperatures respectively have reached predetermined thresholds.

When the first completion condition is not satisfied and negative determination is made in step ST6, the process proceeds to step ST7. In step ST7, the seat heater 15, the steering heater 16, and the glass dimmer 17 are operated. In other words, the seat cushion portion and seat back portion of the seat are heated by the seat heater 15, the steering wheel is heated by the steering heater 16, and the amount of solar radiation into the vehicle cabin is increased by setting a high light transmittance of the side window glasses or roof glass with the glass dimmer 17.

On the other hand, when the conditioning air outlet mode set by the air outlet mode setting unit 201 is not the FOOT mode and negative determination is made in step ST5, the process proceeds to step ST8 (FIG. 6). In step ST8, it is determined whether the conditioning air outlet mode set by the air outlet mode setting unit 201 is the FACE mode. When the air outlet mode is the FACE mode and affirmative determination is made in step ST8, the process proceeds to step ST9. In step ST9, it is determined whether a second completion condition (described later) is satisfied. The second completion condition is a condition for stopping the device (SVS 21) that is operated in a state where the air outlet mode is the FACE mode, and is satisfied, for example, when an elapsed time from the start of operation of the device has reached a predetermined time. The second completion condition is not limited thereto, and may be set as needed. For example, the second completion condition may be satisfied when the temperature of the seat, or the like, is detected and the temperature has decreased to a predetermined threshold.

When the second completion condition is not satisfied and negative determination is made in step ST9, the process proceeds to step ST10. In step ST10, the SVS 21 is operated. In other words, the seat is cooled (the heat of the seat is radiated) by operating the air sending fan.

When the conditioning air outlet mode set by the air outlet mode setting unit 201 is not the FACE mode and negative determination is made in step ST8, the process proceeds to step ST11. In step ST11, it is determined whether the conditioning air outlet mode set by the air outlet mode setting unit 201 is the DEF mode. When the air outlet mode is the DEF mode and affirmative determination is made in step ST11, the process proceeds to step ST12. In step ST12, it is determined whether a third completion condition (described later) is satisfied. The third completion condition is a condition for stopping the devices (EHW 11, the rear defogger 12, the mirror heater 13, and the wiper deicer 14) that are operated in a state where the air outlet mode is the DEF mode, and is satisfied, for example, when an elapsed time from the start of operation of these devices has reached a predetermined time. The third completion condition is not limited thereto, and may be set as needed. For example, the third completion condition may be satisfied when the temperature of the window glass, the temperature of the side mirror, and the like, are detected and the temperatures respectively have reached predetermined thresholds.

In this way, designated devices associated with the conditioning air outlet mode set by the air outlet mode setting unit 201 are operated.

In a situation in which the conditioning air outlet mode set by the air outlet mode setting unit 201 is the FOOT mode and the seat heater 15, the steering heater 16, and the glass dimmer 17 are being operated (step ST7), it is determined in step ST14 whether the first completion condition is satisfied.

When the first completion condition is not satisfied and negative determination is made in step ST14, pre-air-conditioning in the FOOT mode is continued, and the operation of each of the devices (the seat heater 15, the steering heater 16, and the glass dimmer 17) is continued.

In step ST15, it is determined whether a pre-air-conditioning stop command signal has been received as a result of an operation on the electronic key K by the user U. The pre-air-conditioning stop command signal is received by the communication unit 700. When the pre-air-conditioning stop command signal has not been received and negative determination is made in step ST15, the process is returned back to step ST1. Here, the pre-air-conditioning flag has been already set to 1, so affirmative determination is made in step ST1, and the process proceeds to step ST5. When the process proceeds to step ST6 in a situation in which pre-air-conditioning in the FOOT mode is continued, negative determination is made in step ST6 and step ST14 because the first completion condition is not satisfied as described above, and the process is returned on the condition that the pre-air-conditioning stop command signal has not been received. In other words, the operations of step ST1, step ST5 to step ST7, step ST14, and step ST15 are repeated.

On the other hand, when the first completion condition is satisfied and affirmative determination is made in step ST14, the process proceeds to step ST18. In step ST18, the devices currently being operated (the seat heater 15, the steering heater 16, and the glass dimmer 17) are stopped. In this case, the air conditioner 400 continues pre-air-conditioning, and the process is returned back to step ST1. Here, the pre-air-conditioning flag has been already set to 1, so affirmative determination is made in step ST1, and the process proceeds to step ST5. When the process proceeds to step ST6 in a situation in which pre-air-conditioning in the FOOT mode is continued, affirmative determination is made in step ST6 because the first completion condition is satisfied as described above, and the process is returned. In other words, after the first completion condition is satisfied, the operations of step ST1, step ST5, and step ST6 are repeated on the condition that pre-air-conditioning in the FOOT mode is continued.

On the other hand, in a situation in which the conditioning air outlet mode set by the air outlet mode setting unit 201 is the FACE mode and the SVS 21 is being operated (step ST10), it is determined in step ST19 whether the second completion condition is satisfied.

When the second completion condition is not satisfied and negative determination is made in step ST19, pre-air-conditioning in the FACE mode is continued, and the operation of the device (SVS 21) is continued.

In step ST15, it is determined whether a pre-air-conditioning stop command signal has been received as a result of an operation on the electronic key K by the user U. When the pre-air-conditioning stop command signal has not been received and negative determination is made in step ST15, the operations are substantially equal to the above-described operations. In this case, the operations of step ST1, step ST5, step ST8 to step ST10, step ST19, and step ST15 are repeated.

On the other hand, when the second completion condition is satisfied and affirmative determination is made in step ST19, the process proceeds to step ST18. In step ST18, the device currently being operated (SVS 21) is stopped. In this case, the air conditioner 400 continues pre-air-conditioning, and the process is returned back to step ST1. In this case, the operations of step ST1, step ST5, step ST8, and step ST9 are repeated.

In a situation in which the conditioning air outlet mode set by the air outlet mode setting unit 201 is the DEF mode and the EHW 11, the rear defogger 12, the mirror heater 13, and the wiper deicer 14 are being operated (step ST13), it is determined in step ST20 whether the third completion condition is satisfied.

When the third completion condition is not satisfied and negative determination is made in step ST20, pre-air-conditioning in the DEF mode is continued, and the operations of the devices (the EHW 11, the rear defogger 12, the mirror heater 13, and the wiper deicer 14) are continued.

In step ST15, it is determined whether a pre-air-conditioning stop command signal has been received as a result of an operation on the electronic key K by the user U. When the pre-air-conditioning stop command signal has not been received and negative determination is made in step ST15, the operations are substantially equal to the above-described operations. In this case, the operations of step ST1, step ST5, step ST8, step ST11 to step ST13, step ST20, and step ST15 are repeated.

On the other hand, when the third completion condition is satisfied and affirmative determination is made in step ST20, the process proceeds to step ST18, and the devices currently being operated (the EHW 11, the rear defogger 12, the mirror heater 13, and the wiper deicer 14) are stopped. In this case, the air conditioner 400 continues pre-air-conditioning, and the process is returned back to step ST1. In this case, the operations of step ST1, step ST5, step ST8, step ST11, and step ST12 are repeated.

When the pre-air-conditioning stop command signal has been received and affirmative determination is made in step ST15, the process proceeds to step ST16. In step ST16, pre-air-conditioning is stopped (the air conditioner 400 is stopped), the devices currently being operated are stopped, and the process proceeds to step ST17. In step ST17, the pre-air-conditioning flag is reset to 0.

### Advantageous Effects of Embodiment

As described above, in the present embodiment, during pre-air-conditioning for previously air-conditioning the inside of the vehicle cabin before the user U gets in the vehicle V, the determining unit 202 determines whether the operation of each of the heating devices HD and the cooling device CD is required, and the device control unit 203 operates the device(s) HD, CD, whose operation is determined to be required by the determining unit 202, with electric power from the external power supply. Therefore, the comfort of the user U, which has been difficult to be obtained only with conditioning air through pre-air-conditioning, can be sufficiently improved with the operation of the device(s). In other words, comfort at the time when the user U gets in the vehicle V (comfort, such as a temperature environment inside the vehicle cabin, comfort or easiness of driving for the user U to drive the vehicle V, and good functioning of devices equipped for the vehicle V) can be sufficiently improved.

### Modification

Next, a modification will be described. In the embodiment, the device(s) HD, CD to be operated is/are set according to the conditioning air outlet mode during pre-air-conditioning. Alternatively, in this modification, at the start of pre-air-conditioning, a history of environmental conditions is acquired, and the device(s) HD, CD to be operated is/are set according to the history. Therefore, here, a history of the environmental conditions to be acquired and the device(s) HD, CD to be set according to the history will be mainly described.

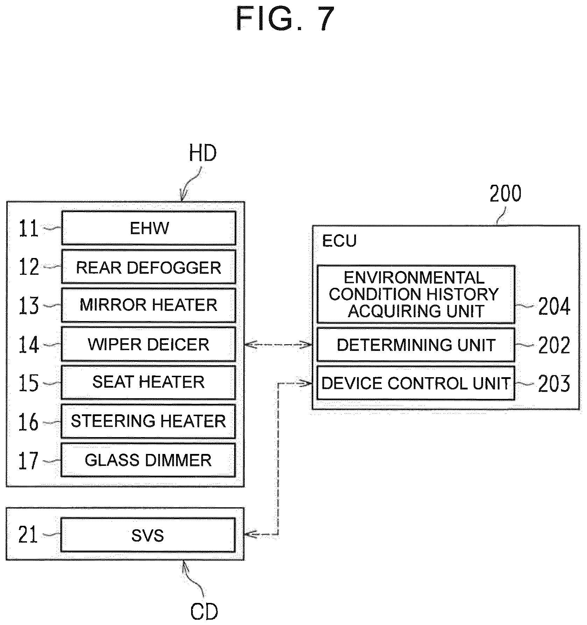

FIG. 7 is a diagram corresponding to FIG. 4 (block diagram for illustrating the configuration of the ECU 200 and the devices HD, CD) in the modification.

As shown in FIG. 7, the ECU 200 includes an environmental condition history acquiring unit 204, the determining unit 202, and the device control unit 203. The environmental condition history acquiring unit 204, the determining unit 202, and the device control unit 203 are implemented by a control program stored in the ROM of the ECU 200. The determining unit 202 and the device control unit 203 are substantially similar to those of the above-described embodiment. In other words, while the air conditioner 400 is performing pre-air-conditioning, the determining unit 202 determines whether the operation of each of the heating devices HD and the cooling device CD is required. Of the heating devices HD and the cooling device CD, the device control unit 203 operates the device(s), whose operation is determined to be required by the determining unit 202, with electric power from the external power supply.

The environmental condition history acquiring unit 204 acquires a history of the environmental conditions from a cloud server (a server that Japan Meteorological Agency, a meteorological company, or the like, manages) (not shown) via the communication unit 700 and stores the history of the environmental conditions. The communication unit 700 and the cloud server each have a wireless communication function and are connected to a network (the Internet, or the like) via a wireless base station or a wireless access point. Thus, information about the history of the environmental conditions, containing weather information, is sent from the cloud server.

Examples of the information about the history of the environmental conditions include whether there had been snowfall, whether there had been rainfall, a change in outside air temperature, a change in humidity, in a time period of six hours back from the time of the start of pre-air-conditioning. The period of time is not limited thereto and may be set as needed.

The determining unit 202 collects these pieces of history information, and, for example, determines the possibility that ice, snow, or frost is adherent on the windshield 800 or rear window glass of the vehicle V, the possibility that fog is on the windshield 800 or the rear window glass, the possibility that ice, snow, or frost is adherent on the side mirror, the possibility that fog is on the side mirror, and the possibility that the wiper blade is stuck (frozen to be stuck) to the windshield 800, estimates the temperature of the seat, estimates the temperature of the steering wheel, and estimates the vehicle cabin temperature.

When there is a history that there had been no rainfall and the outside air temperature had been lower than or equal to a predetermined temperature (for example, lower than or equal to 5°C) in the history of the environmental conditions outside the vehicle, acquired by the environmental condition history acquiring unit 204, the determining unit 202 determines that the vehicle cabin temperature is low although ice or snow is not adherent on the window glass, and determines that the operation of each of the seat heater 15, the steering heater 16, and the glass dimmer 17 is required in parallel with pre-air-conditioning. The predetermined temperature is not limited thereto and may be set as needed. By operating these devices 15, 16, 17, cold discomfort to be felt by the user U in the vehicle is reduced.

When there is a history that the outside air temperature had been higher than or equal to a predetermined temperature (for example, higher than or equal to 30°C) in the history of the environmental conditions outside the vehicle, acquired by the environmental condition history acquiring unit 204, the determining unit 202 determines that the vehicle cabin temperature is high, and determines that the operation of the SVS 21 is required in parallel with pre-air-conditioning. The predetermined temperature is not limited thereto and may be set as needed. By operating the SVS 21, hot discomfort to be felt by the user U in the vehicle is reduced.

When there is at least one of a history that there had been snowfall, a history that there had been rainfall in a state where the outside air temperature had been lower than or equal to a predetermined temperature (for example, lower than or equal to 0°C), and a history that the humidity outside the vehicle had been higher than or equal to a predetermined value (for example, higher than or equal to 80%) in the history of the environmental conditions outside the vehicle, acquired by the environmental condition history acquiring unit 204, the determining unit 202 determines that the operation of each of the EHW 11, the rear defogger 12, the mirror heater 13, and the wiper deicer 14 is required in parallel with pre-air-conditioning. The predetermined temperature and the predetermined value are not limited thereto and may be set as needed. By operating these devices 11, 12, 13, 14, fogging on the window glass or side mirror is removed, adherent ice, snow, or frost is removed, or sticking of the wiper blade is cleared.

The operations after the designated device(s) HD, CD is/are operated according to the history of the environmental conditions outside the vehicle, acquired by the environmental condition history acquiring unit 204 in this way, are similar to those of the above-described embodiment.

According to the modification as well, the comfort of the user U, which has been difficult to be obtained only with conditioning air through pre-air-conditioning, can be sufficiently improved with the operation of the device(s). In other words, comfort at the time when the user U gets in the vehicle V (comfort, such as a temperature environment inside the vehicle cabin, comfort or easiness of driving for the user U to drive the vehicle V, and good functioning of devices equipped for the vehicle V) can be sufficiently improved. Other Embodiments

The invention is not limited to the embodiment or the modification. The invention also encompasses all modifications or improvements within the scope of the appended claims and equivalents thereof.

For example, in the embodiment and the modification, examples of the heating devices HD include the EHW 11, the rear defogger 12, the mirror heater 13, the wiper deicer 14, the seat heater 15, the steering heater 16, and the glass dimmer 17. Examples of the cooling device CD include the SVS 21. The heating device HD and the cooling device CD just need to be devices to improve the comfort of a user in the vehicle and are not limited to the above-described ones.

In the embodiment and the modification, the EHW 11, the rear defogger 12, the mirror heater 13, and the wiper deicer 14 are operated at the same time and stopped at the same time. The seat heater 15, the steering heater 16, and the glass dimmer 17 are also operated at the same time and stopped at the same time. In the invention, the timing to start operating each device and the timing to stop each device each do not always need to be the same.

In the embodiment, when the conditioning air outlet mode set by the air outlet mode setting unit 201 is automatically set, it is determined whether the operation of each of the heating devices HD and the cooling device CD is required according to the air outlet mode. In this case, when the user (user not in the vehicle) U has changed the air outlet mode by operating the electronic key K, in response to the change, it may be determined whether the operation of each of the heating devices HD and the cooling device CD is required according to the changed air outlet mode, or, not in response to the change, it may be determined whether the operation of each of the heating devices HD and the cooling device CD is required (determination is made in accordance with the air outlet mode having been automatically set).

In the embodiment, it is determined whether the operation of each of the heating devices HD and the cooling device CD is required according to the air outlet mode automatically set based on the environment at the time of the start of pre-air-conditioning. In the modification, it is determined whether the operation of each of the heating devices HD and the cooling device CD is required according to the history of the environmental conditions outside the vehicle. According to the invention, the air outlet mode may be set according to the history of the environmental conditions outside the vehicle, and it may be determined whether the operation of each of the heating devices HD and the cooling device CD is required according to the set air outlet mode.

The invention is applicable to a control apparatus for a vehicle equipped with an air conditioner that is able to perform pre-air-conditioning.

## Claims

1. A control apparatus for a vehicle (V) including an air conditioner (400) configured to perform pre-air-conditioning for previously air-conditioning an inside of a vehicle cabin (500) before a user (U) gets in the vehicle, the control apparatus comprising:
a determining unit (202) configured to, when the air conditioner is performing the pre-air-conditioning, determine whether an operation of a heating device (HD) or cooling device (CD) is required, the heating device and the cooling device being mounted on the vehicle to improve comfort of the user; and
a device control unit (203) configured to operate one of the heating device and the cooling device, whose operation is determined to be required by the determining unit.

2. The control apparatus according to claim 1, further comprising an air outlet mode setting unit (201) configured to automatically set an air outlet mode of conditioning air during the pre-air-conditioning according to an environmental condition, wherein the determining unit is configured to determine whether the operation of each of the heating device and the cooling device is required according to the air outlet mode automatically set by the air outlet mode setting unit.

3. The control apparatus according to claim 2, wherein
the air conditioner is configured to set a FOOT mode or a FACE mode as the air outlet mode for conditioning air into the vehicle cabin, the FOOT mode being set on a request to heat the inside of the vehicle cabin, and the FACE mode being set on a request to cool the inside of the vehicle cabin, and
the determining unit is configured to
when the air outlet mode set by the air outlet mode setting unit is the FOOT mode, determine that the operation of the heating device and
when the air outlet mode set by the air outlet mode setting unit is the FACE mode, determine that the operation of the cooling device.

4. The control apparatus according to claim 2, wherein:
the heating device includes at least one of an electrical heated windshield (11) configured to heat a windshield, a rear defogger (12) configured to heat a rear window glass, a mirror heater (13) configured to heat a side mirror, a wiper deicer (14) configured to heat a portion around a wiper blade on the windshield, a seat heater (15) configured to heat a seat, a steering heater (16) configured to heat a steering wheel, and a glass dimmer (17) configured to increase a light transmittance of a window glass when operated;
the cooling device includes a seat ventilation (21) system configured to radiate heat of the seat;
the air conditioner is configured to set a FOOT mode, a FACE mode, or a DEF mode as the air outlet mode for conditioning air into the vehicle cabin, the FOOT mode being set on a request to heat the inside of the vehicle cabin, the FACE mode being set on a request to cool the inside of the vehicle cabin, and the DEF mode being set on a request to defog the windshield or on a request to thaw freeze; and
the determining unit is configured to
when the air outlet mode set by the air outlet mode setting unit is the FOOT mode, determine that the operation of at least one of the seat heater, the steering heater, and the glass dimmer is required,
when the air outlet mode set by the air outlet mode setting unit is the FACE mode, determine that the seat ventilation system needs to be operated, and
when the air outlet mode set by the air outlet mode setting unit is the DEF mode, determine that the operation of at least one of the electrical heated windshield, rear defogger, mirror heater, and the wiper deicer is required.

5. The control apparatus according to claim 1, further comprising an environmental condition history acquiring unit (204) configured to, when the air conditioner starts the pre-air-conditioning, acquire a history of an environmental condition outside the vehicle, wherein the determining unit is configured to determine whether the operation of each of the heating device and the cooling device is required according to the history acquired by the environmental condition history acquiring unit.

6. The control apparatus according to claim 5, wherein the determining unit is configured to
when the history contains information that an outside air temperature has been lower than or equal to a first predetermined temperature, determine that the operation of the heating device is required, and
when the history contains information that the outside air temperature has been higher than or equal to a second predetermined temperature, determine that the operation of the cooling device is required.

7. The control apparatus according to claim 5, wherein:
the heating device includes at least one of an electrical heated windshield (11) configured to heat a windshield, a rear defogger (12) configured to heat a rear window glass, a mirror heater (13) configured to heat a side mirror, a wiper deicer (14) configured to heat a portion around a wiper blade on the windshield, a seat heater (15) configured to heat a seat, a steering heater (16) configured to heat a steering wheel, and a glass dimmer (17) configured to increase a light transmittance of a window glass when operated;
the cooling device includes a seat ventilation system (21) configured to radiate heat of the seat;
the determining unit is configured to
when the history contains information that an outside air temperature has been lower than or equal to a first predetermined temperature without a rainfall, determine that the operation of at least one of the seat heater, the steering heater, and the glass dimmer is required,
when the history contains information that the outside air temperature has been higher than or equal to a second predetermined temperature, determine that the operation of the seat ventilation system is required, and
when the history contains at least one of information that snow has fallen, information that the outside air temperature is lower than or equal to a third predetermined temperature with the rainfall, and information that a humidity outside the vehicle has been higher than or equal to a predetermined value, determine that the operation of at least one of the electrical heated windshield, the rear defogger, the mirror heater, and the wiper deicer is required.

8. The control apparatus according to claim 1, wherein the comfort includes at least one of a temperature environment inside the vehicle cabin, comfort or easiness of driving for the user to drive the vehicle, and good functioning of devices equipped for the vehicle.

9. The control apparatus according to claim 1, wherein the heating device and the cooling device are different devices from the air conditioner.

10. The control apparatus according to claim 1, wherein
the vehicle includes a charging unit (370) configured to charge a battery (360) with electric power from an external power supply, and
the device control unit is configured to operate the heating device or the cooling device by using the electric power the external power supply.

11. A control method, performed by an electronic control unit (200), for a vehicle (V) including an air conditioner (400) configured to perform pre-air-conditioning for previously air-conditioning an inside of a vehicle cabin (500) before a user gets in the vehicle, the control method comprising:
determining whether an operating condition of each of a heating device (HD) and a cooling device (CD) is satisfied while the air conditioner is performing the pre-air-conditioning, the heating device and the cooling device being mounted on the vehicle to improve comfort of the user;
operating the heating device when the operating condition of the heating device is satisfied; and
operating the cooling device when the operating condition of the cooling device is satisfied.

12. The control method according to claim 11, further comprising: setting heating the inside of the vehicle cabin or cooling the inside of the vehicle cabin as the pre-air-conditioning automatically according to an environmental condition outside the vehicle.

13. The control method according to claim 11, wherein
the operating condition of the heating device is that heating the inside of the vehicle cabin is being performed as the pre-air-conditioning; and
the operating condition of the cooling device is that cooling the inside of the vehicle cabin is being performed as the pre-air-conditioning.

14. The control method according to claim 11, further comprising acquiring a history of an environmental condition outside the vehicle at a timing when the air conditioner starts the pre-air-conditioning, wherein the operating conditions of the heating device and the cooling device are predetermined based on the environmental condition.

15. The control method according to claim 14, wherein
the operating condition of the heating device is that the history contains information that an outside air temperature has been equal to or lower than a first predetermined temperature, and
the operating condition of the cooling device is that the history contains information that the outside air temperature has been higher than a second predetermined temperature.
